# EUROPEAN PATENT SPECIFICATION

(11) **EP 2 361 021 B1**
(45) Date of publication and mention of the grant of the patent: **06.08.2014**
(21) Application number: 09812439.9
(22) Date of filing: 17.12.2009
(51) Int. Cl.: A23N 1/02

(54) **METHOD FOR REMOVING WASTE PRODUCTS OBTAINED FROM A PROCESS FOR EXTRACTING JUICE, OR PUREE, FROM VEGETABLE OR ANIMAL FOOD, AND APPARATUS THEREFOR**
VERFAHREN ZUR BESEITIUNG VON ABFALLPRODUKTEN AUS EINEM SAFTPRESS- ODER PÜRIERVERFAHREN AUS PFLANZLICHEM ODER TIERISCHEM AUSGANGSMATERIAL UND GERÄT DAFÜR
PROCÉDÉ DESTINÉ À ENLEVER DES PRODUITS RÉSIDUELS ISSUS D'UN PROCÉDÉ D'EXTRACTION DE JUS OU DE PURÉE D'UN LÉGUME OU D'UN ALIMENT D'ORIGINE ANIMALE, ET APPAREIL ASSOCIÉ

(30) Priority: 17.12.2008 IT PI20080128
(43) Date of publication of application: 31.08.2011
(73) Proprietor: Bertocchi, Alessandro, 43125 Parma (IT)
(72) Inventor: Bertocchi, Alessandro, 43125 Parma (IT)
(74) Representative: Celestino, Marco
(86) International application number: PCT/IB2009/007805
(87) International publication number: WO 2010/070433

(56) References cited:
- EP-A1- 0 888 718
- WO-A2-2005/036993
- DE-A1- 3 817 689
- DE-T2- 60 303 503
- US-A- 3 103 438

## Description

### Field of the invention

The present invention relates to the food industry and, in particular, it relates to a method for removal of waste material, such as peelings, seeds, fibres, etc. during a process for extracting juice and puree from vegetable or animal food.

Furthermore, the invention relates to an apparatus that carries out this method.

### Description of the prior art

As well known, a variety exists of types of rotating machines (milling and finishing machines) for extracting juice or puree mainly from vegetable food, fruit and vegetables, but also from animal food, meat and fish.

Normally, the product to treat is previously softened or chopped more or less finely in a first step for reaching then a second step in an extraction machine where it can also be heated.

The extraction machines of prior art are essentially made up of a fixed structure that comprises a rotary drum sieve of cylindrical or conical shape, so-called sieve, and by an rotor with blades that rotates inside. The rotor is mounted on a shaft and caused to rotate quickly by a motor. In particular, a chopped or softened food product is continuously pushed radially by centrifugal force against the sieve. This way, it is filtered through the sieve holes of the sieve, producing a liquid part (juice) and/or a solid but homogeneous part (puree) that are conveyed away and collected for being then subject to further treatments. The solid parts that do not pass through the sieve, instead, are brought away axially opposite to the inlet and are automatically conveyed to an discharging station that is arranged opposite to the feeding duct. Such waste material is normally caused to leave the machine by the same pressure caused by the rotor within the sieve until they leave the extractor through an opening present on the body of the machine. The waste are then collected and withdrawn by means of conveying systems such as screw conveyors, web conveyors and the like.

However, while the puree flows easily away from the extraction machine by a pump to which it arrives by gravity, the waste have, instead, a difficult evacuation from the machine and a difficult transfer from the machine to a collection area.

The waste, in fact, during the steps of extracting the puree is intentionally as dry as possible, in order to achieve a maximum efficiency of the extraction process, and therefore it is formed mainly by fibres having a low content of humidity.

Furthermore, some types of waste deriving from determined food products have a high content of sugar and are often very viscous and sticky. Therefore, during the step of evacuation from the extraction machine, or within the conveyor ducts, the waste can compact and jam the outlet of the extraction machine, or the ducts downstream of it, as well as the conveyor means.

In case of extraction of puree from an extraction machine that operates under vacuum, the evacuation of the waste has to be carried out by devices that maintain the vacuum within the machine in the critical passage of the waste from the vacuum to an environment pressure. Such evacuation devices can comprise various systems, such as pistons, or rotors, like a variety of types of pumps, but in any case no back passages should be formed through the waste for the air that tends to enter inside from the outer environment. Therefore the evacuation system has to maintain vacuum tight during operation of the machine.

Moreover, all these devices are fed with the waste directly by the rotor of the machine that presses the waste until it falls vertically at the exit from the body of the machine, thus entering an evacuation conveyor; the waste, as above said may stick to the walls which thickens progressively until it is completely obstructed, causing then a block of the machine and different phenomena, such as burning the product by friction as well as jamming the body and the rotor of the machine with waste material.

In addition, the device is designed for products that are more or less homogeneous, but it is not adapted for very viscous and sticky waste, which could spoiling the pistons or rotors of the machine. In fact, the waste material can stick to the surfaces of the device jeopardizing the capacity of the device of transferring it into a collection container.

In US3103438 a method is described for making apple juice. The method provides chopping the apples in the presence of a edible antioxidant substance, for example ascorbic acid, and then forcing it through a narrow passage, comprising the juice, the peelings, the seeds and the other not edible solid parts. The final product is fed through a pump to a first centrifugal device in which the separation is carried out of the apple juice from a secondary product that contains still apple pulp and that is then diluted with water and discharged by gravity into a container. The secondary diluted product is then drawn by a pump and sent to second centrifugal device in which a waste material and an apple puree are separated. In particular, the waste is discharged by gravity from the centrifugal device.

In DE60303503 a method is described to prepare juice of fruit, for example apple juice. The method comprises a first extraction to obtain an intermediate product, preferably without peelings, peduncles and seeds, obtaining juice and a first-extraction waste. To the first-extraction waste, which still contains apple pulp, hot water is added to dissolve the sugar and increasing the sugar content. Then, a secondary product is obtained that is subject to a second extraction obtaining juice and second extraction waste. The first and second extraction juices are, then mixed obtaining the final product.

DE3817689 describes a method to obtain fruit juice by the steps of pressing the fruit and centrifuging it continuously up to an intermediate product with separation of a solid fraction and a liquid fraction. In the intermediate product a foam is present that is treated with pectine and then separated mechanically from the liquid fraction. The foam is then treated with oxygen. A separation step is also provided by decantation of the fibrous cellulosic components of the intermediate product. The solid part can be mixed with water and subject to a further centrifugation obtaining a juice and further fibrous cellulosic components.

In all the known systems as above described, juice of fruit are extracted, giving rise to a intermediate waste that contains still pulp and that is then diluted, in order to extract said pulp in the form of puree with maximization of the extraction efficiency.

In any case, the known systems as above described do not deal with the discharge of the final waste material, i.e. the discharge of the solid part at the exit of the second extraction, mainly peelings, peduncles seeds and other hard parts, is carried out slowly and in a completely solid phase, with the risk of jamming the waste discharge mouth with subsequent need of maintenance stops for restoring the correct operative conditions.

This type of problem tends to increase for machines that work in vacuum conditions during the extraction, for minimizing the enzymatic reactions during the extraction, since the discharge push force of the waste towards the outlet mouth is weaker than the machines that work at atmospheric pressure.

US3103438 discloses the preambles of claims 1 and 8, showing a method and an apparatus for producing apple sauce comprising the steps of crushing the apples and centrifugally screening the pulp from the solids that are discharged through a passageway. Other similar methods are disclosed also in DE60303503 and DE3817689.

### Summary of the invention

It is therefore a feature of the present invention to provide a method for removal of waste material, such as peelings, seeds, fibres in a process for extracting puree, that is adapted to assist and speed up the discharge of the waste.

It is another feature of the present invention to provide a method for removal of waste material, such as peelings, seeds, fibres in a process for extracting puree that improves the overall efficiency of the extraction process.

It is also a feature of the present invention to provide such a method that avoids the drawback of similar apparatus of prior art, and, in particular, undesired maintenance stops for cleaning ducts, or transfer devices obstructed by waste material.

It is still a feature of the present invention to provide a method for removal of waste material that is particularly adapted to extraction machines that work under vacuum for minimizing the enzymatic reactions during the extraction.

It is another feature of the present invention to provide an apparatus that achieves the same advantages.

These and other features are accomplished with the method in accordance with claim 1.

Advantageously, the second outlet is a discharge duct and the step of adding a measured amount of a liquid is carried out at a point of the discharge duct.

In particular, the second outlet is a discharge duct and the step of adding a measured amount of a liquid is carried out at a plurality of points along the discharge duct.

Advantageously, the step or removing by suction is effected by a suction pump in communication with said second outlet.

The extraction step is carried out in a vacuum environment for minimizing the enzymatic reactions.

Advantageously, before the extraction step, the vegetable or animal food is subject to a treating step to obtain a treated product, wherein said treating step is selected from the group comprised of:
a softening step;
a grinding step;
- a chopping step;
- a sifting step;
- a cutting step;
or a combination thereof.

Preferably, the sieve has tubular shape and during the extraction step the main product, comprising the puree and/or the juice, is discharged radially by the sieve through the sieve holes and the first outlet, whereas the waste material moves axially in the rotor up to reaching the second outlet.

In particular, the heterogeneous mixture can be subject to a separation step, for example by centrifugation, for separating the waste material from the liquid. The liquid thus obtained can be in part recirculated for being again mixed to other substantially solid waste material deriving from the extraction step.

According to the invention, an apparatus in accordance with claim 8 is provided.

Advantageously, the second outlet is in communication with a discharge duct and the adding section comprises at least one nozzle through which the measured amount of liquid is sprayed into discharge duct, and is mixed with the substantially solid waste material creating a heterogeneous mixture.

In particular, the suction means can comprise at least one suction pump in communication with the second outlet.

In the extraction section a determined vacuum is created for minimizing the enzymatic reactions.

Advantageously between the feeding section and the extraction section a treatment section is provided for treating the vegetable or animal food, obtaining a treated product.

For example, the treatment section can be selected from the group comprised of:
- a softening section;
- a grinding section;
- a chopping section;
- a sifting section;
- a cutting section;
- or a combination thereof.

Advantageously, the treatment section is a softening section comprising a rotor operated by a motor and that is adapted to apply, against a stator, a plurality of pulses in quick succession to the starting product.

In particular, the sieve has tubular shape and the first outlet is arranged along a direction that is substantially radial to the sieve, such that the main product is discharged radially to the sieve, and the waste material moves axially in the rotor up to reaching said second outlet.

Advantageously, the second outlet is arranged at the end of the sieve.

Preferably, the liquid is water.

### Brief description of the drawings

The invention will be made clearer with the following description of an exemplary embodiment thereof, exemplifying but not limitative, with reference to the attached drawings in which:
- figure 1 shows a block diagram of the main steps of the method according to the invention, for removal of waste material during a method for extracting puree from food of vegetable or animal origin;
- figure 2 diagrammatically shows an apparatus for carrying out the method according to the invention;
- figure 3 diagrammatically shows a partial cross sectional view of a possible machine that can be used for separating the main product, i.e. the puree, or the juice, from the substantially solid waste material;
- figure 4 diagrammatically shows an exemplary embodiment of the adding means that adds a liquid to the substantially solid waste material during the extraction step alternative to that of Fig. 2.

### Detailed description of some exemplary embodiments

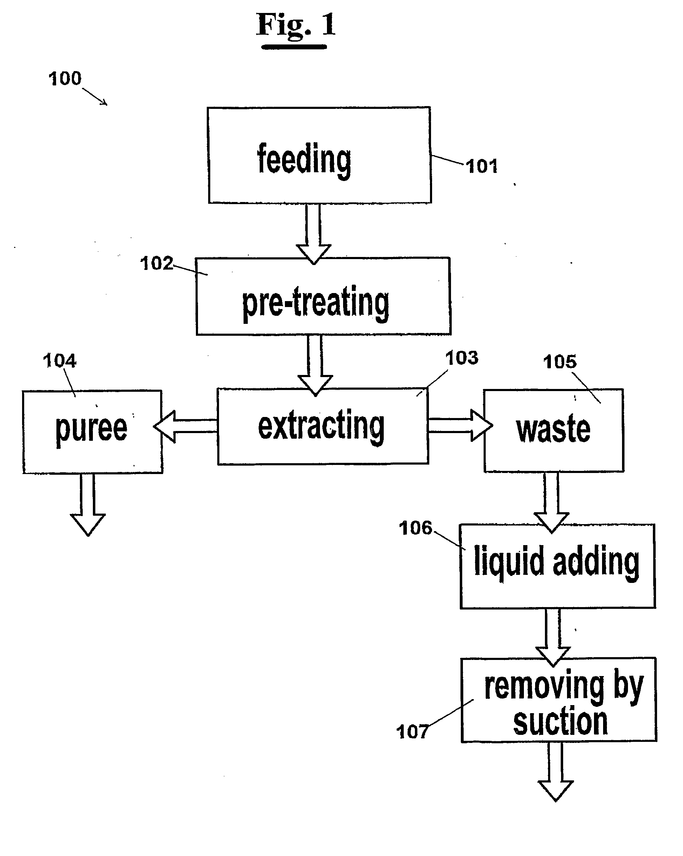

Fig. 1 shows a block diagram 100 of the main steps of the method according to the invention, for removal of waste material in a process for extracting puree, or juice, from a starting product based on vegetable or animal food.

In particular, the method provides a step of feeding a measured amount of starting product to a machine for extracting puree, block 101.

The starting product can be pre-treated, for example softened, block 102, and then subject to an extraction step, block 103, obtaining a main product comprising the puree, block 104, which is discharged via a first outlet and of a waste material that is discharged via a second outlet, block 105.

The waste material is then mixed with a measured amount of a liquid, for example water, obtaining a heterogeneous mixture, block 106. The heterogeneous mixture comprising the liquid and the substantially solid waste material can be then removed by suction, for example by a hydraulic pump, block 107, which is connected to the second outlet, and quickly withdrawn avoiding the risk of jamming the machine at the second outlet.

In an exemplary embodiment of the invention, an apparatus 1, capable of carrying out the method above shown with reference to Fig. 1, provides a feeding section 10 at which the starting product 5 is loaded from a hopper 15. From the feeding section the product can be fed into a treatment section obtaining a treated product. For example, the treatment section can comprise a softening section 20, which is equipped with a rotor 21 and a stator 22 mounted around it. The rotor 21 is, in particular, operated by a motor 80 for applying, in combination with stator 22, a plurality of pulses in quick succession to the starting product. The softened product, at the outlet of the softening section 30, reaches a extraction section 40 where a second rotor, which is operated by the motor 80, engages in a sieve 26 of equal size and arranged in a stator 24, see for example the patent IT1199392.

In the extraction section 40 the second rotor forces the softened product against the surface of the sieve 26 and separates a main product (juice or puree), which is discharged via a first outlet 41, from a substantially solid waste material that comprises peelings, seeds, and other hard fibres, which, instead, are discharged via a second outlet 42.

Downstream of the extraction section 40, furthermore, an adding section 50 is provided at which a measured amount of a liquid, for example water, is added to the waste material, obtaining a heterogeneous liquid/solid mixture.

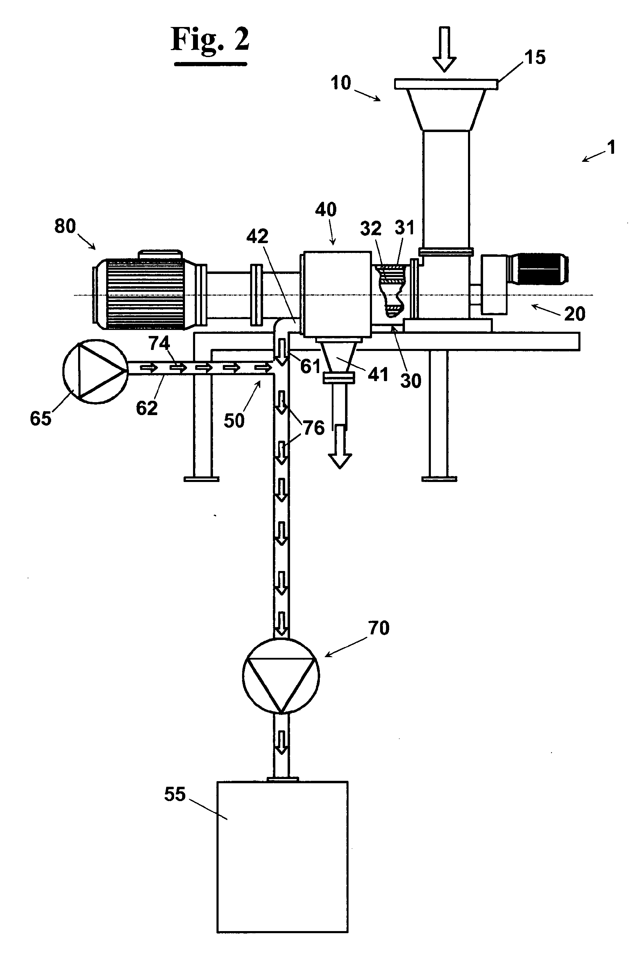

As shown in Fig. 2, the addition of the liquid to the waste material 72 can be made, for example, by a feeding duct 62 for the liquid 74 pushed by a pump 65.

Feeding duct 62 can exit into a discharge duct 61 that connects the second outlet 42 of the extraction section 40 to a storage section 55 in which the waste material 72 is collected. In this case, the liquid 74 is mixed with the waste material 72, to obtain heterogeneous mixture 76, in the discharge duct 61 downstream of the exit point of feeding duct 62.

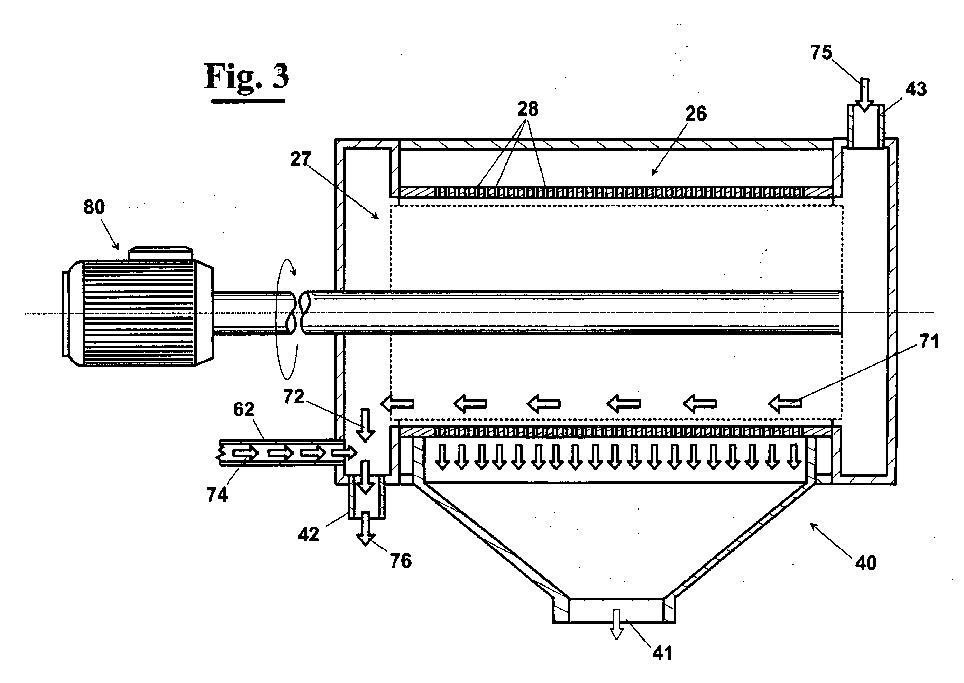

Alternatively, as shown in Fig. 3, the addition of the liquid 74 and its mixing with the waste material 72 can be effected in a zone between the extraction section 40 and second outlet 42.

The waste material 72 that is present in the heterogeneous mixture 76 can be thus easily conveyed away by a pump 70, for example a rotating pump, or a reciprocating pump, into storage section 55. Then, the heterogeneous mixture 76 can be subject to a separation step, for example by centrifugation, for dividing the waste material 72 from the liquid 74.

As shown in Fig. 3, the starting product 75 is inserted through an inlet 43 into extraction section 40, for example of an extraction machine, in which a sieve 26 is present having tubular shape. The sieve 26 has a plurality of holes 28 through which the main product 71 passes through, pushed by the rotor 27, for being then directed towards the first outlet 41, which is arranged radially about the sieve 26. The substantially solid waste material 72, instead, which cannot not pass through the sieve holes 28, moves axially along the extraction section 40 up to reaching outlet 42.

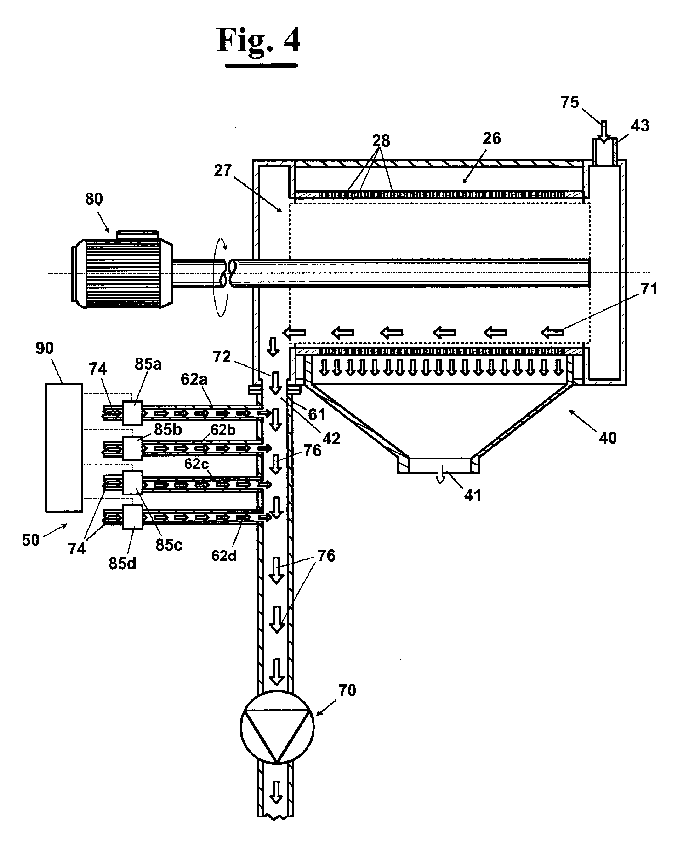

The step of mixing liquid 74 with waste material 72 at the second outlet of the extraction section 40 can be made using several ducts, for example four feeding ducts 62a-62d, exit into discharge duct 61 (Fig. 4). In particular, feeding ducts 62a-62d exit into waste discharge duct 61 at different points. Each feeding duct 62a-62d can be, for example, connected to a respective valve 85a-85d, for example a solenoid valve, which can be closed, or open, independently from each other, by a control unit 90, according to type of process. The liquid 74 once reached discharge duct 61, through at least one feeding duct 62a-62d, is mixed with the substantially solid waste material 72 creating heterogeneous mixture 76 that can be easily removed away by pump 70.

## Claims

1. Method for removal of waste material in a process for extracting puree, or juice, from vegetable or animal food, said method comprising the steps of:
- feeding said vegetable or animal food;
- extracting a main product comprising said puree, or juice, from said vegetable or animal food, said extracting step being made through a rotor (27) that works in combination with a sieve (26) that has a plurality of holes (28), to provide the separation of said food into a main product and into a substantially solid waste material, said extracting being carried out at an extracting section (40);
- discharging the main product that has passed through said holes via a first outlet (41);
- discharging the substantially solid waste material that has not passed through said holes via a second outlet (42);
providing the further steps of:
- adding a measured amount of a liquid (74) to said substantially solid waste material downstream of said extracting step and at said second outlet (42) in order to obtain a heterogeneous mixture comprising said waste material and said liquid; **characterised in that**
- it removes by suction said heterogeneous mixture from said second outlet (42), said suction step carried out by means of a suction means;
**and in that** said extracting step is carried out in a vacuum environment for minimizing the enzymatic reactions.

2. Method, according to claim 1, wherein said second outlet (42) is a discharge duct (61) and said step of adding a measured amount of a liquid is carried out at a point of said discharge duct (61).

3. Method, according to claim 1, wherein said second outlet (42) is a discharge duct (61) and said step of adding a measured amount of a liquid is carried out at a plurality of points along said discharge duct (61).

4. Method, according to claim 1, wherein said step of removing by suction is effected by a suction pump (70) in communication with said second outlet (42).

5. Method, according to claim 1, wherein before said extracting step said vegetable or animal food is subject to a treating step to obtain a treated product, wherein said treating step is selected from the group comprised of:
- a softening step;
- a grinding step;
- a chopping step;
- a sifting step;
- a cutting step;
or a combination thereof.

6. Method, according to claim 1, wherein said sieve (26) has tubular shape and during said extracting step said main product, comprising said puree and/or said juice, is discharged radially to said sieve (26) through said holes (28) and said first outlet (41), whereas said waste material moves axially in said rotor up to reaching said second outlet (42).

7. Method, according to claim 1, wherein said heterogeneous mixture is subject to a separation step, for example by centrifugation, for dividing said substantially solid waste material from said liquid.

8. Apparatus for extracting puree, or juice, from vegetable or animal food, comprising:
- a feeding section for feeding said vegetable or animal food;
- an extraction section (40) in which a rotor (27) is arranged that works in combination with a sieve (26) that has a plurality of holes (28) in order to separate said food into a main product comprising said puree, or juice, which passes through said sieve (26), and into a substantially solid waste material which cannot pass through said sieve (26);
- a discharge section comprising:
- a first outlet (41) through which said main product that has passed through said holes (28) is discharged;
- a second outlet (42) through which said substantially solid waste material that has not passed through said holes (28) is discharged; providing, furthermore:
- an adding section (50) for adding a measured amount of a liquid (74) to said substantially solid waste material obtaining a heterogeneous mixture comprising said liquid and said waste material, said adding section (50) being arranged downstream of said extracting section (40) and at said second outlet (42); **characterized in that**
a suction section for removing said heterogeneous mixture from said second outlet (42), in said suction section a suction means being provided **and in that** in said extracting section a determined vacuum is created for minimizing the enzymatic reactions.

9. Apparatus, according to claim 8, wherein said second outlet (42) is in communication with a discharge duct (61) and feeding duct (62) of said adding section (50) comprises at least one nozzle through which said measured amount of liquid is sprayed into said discharge duct (61), and is mixed with said substantially solid waste material creating a heterogeneous mixture.

10. Apparatus, according to claim 8, wherein said suction means comprises at least one suction pump in communication with said second outlet (42).

11. Apparatus, according to claim 8, wherein between said feeding section and said extracting section a treatment section is provided for treating said vegetable or animal food, obtaining a treated product, said treatment section being selected from the group comprised of:
- a softening section;
- a grinding section;
- a chopping section;
- a sifting section;
- a cutting section;
- or a combination thereof.

12. Apparatus, according to claim 11, wherein said treatment section is a softening section comprising a rotor (21) operated by a motor (80) and that is adapted to apply, in combination with a stator (22), a plurality of pulses in quick succession on said starting product.

13. Apparatus, according to claim 8, wherein said sieve has tubular shape and said first outlet (41) is arranged along a direction that is substantially radial to said sieve, such that said main product is discharged radially to said sieve, said waste material advancing axially in said rotor up to reaching said second outlet (42) arranged at the end of said sieve.

## Patentansprüche

1. Ein Verfahren zum Entfernen von Abfallstoffen in einem Prozess zum Extrahieren von Püree oder Saft aus pflanzlichen oder tierischen Nahrungsmitteln, wobei das genannte Verfahren folgende Schritte umfasst:
- Zuführen der genannten pflanzlichen tierischen Nahrungsmittel;
- Extrahieren eines Hauptprodukts bestehend aus dem genannten Püree oder Saft vom genannten pflanzlichen oder tierischen Nahrungsmitteln, wobei der genannte Schritt des Extrahierens durch einen Rotor (27) erfolgt, der in Kombination mit einem Sieb (26) operiert, das eine Mehrzahl an Löchern (28) aufweist, um die Trennung des genannten Nahrungsmittels in Hauptprodukt und wesentlich feste Abfallstoffe zu ermöglichen, wobei das genannte Extrahieren in einem Extrahierbereich (40) durchgeführt wird;
- Entleeren des Hauptprodukts, das die genannten Löcher durchlaufen hat, durch einen ersten Auslass (41);
- Entleeren der wesentlich festen Abfallstoffe, welche die genannten Löcher nicht durchlaufen haben, durch einen zweiten Auslass (42); Bereitstellen der folgenden weiteren Schritte:
- Hinzufügen einer gemessenen Menge einer Flüssigkeit (74) zu den genannten, wesentlich festen Abfallstoffen stromab des genannten Schritts des Extrahierens und am zweiten Auslass (42), um eine heterogene Mischung aus den genannten Abfallstoffen und der genannten Flüssigkeit zu erhalten;
**dadurch gekennzeichnet, dass**
- dies durch Saugen die genannte heterogene Mischung aus dem genannten zweiten Auslass (42) entfernt;
und der genannte Schritt des Extrahierens in einem Vakuum erfolgt, um enzymatische Reaktionen auf einem Minimum zu halten.

2. Das Verfahren entsprechend Anspruch 1, wobei der genannte zweite Auslass (42) ein Auslassrohr (61) ist und der genannte Schritt des Hinzufügens einer gemessenen Menge einer Flüssigkeit an einer Stelle des genannten Auslassrührs, (61) erfolgt.

3. Das Verfahren entsprechend Anspruch 1, wobei der genannte zweite Auslass (42) ein Auslassrohr (61) ist und der genannte Schritt des Hinzufügens einer gemessenen Menge einer Flüssigkeit an mehreren Stellen des genannten Auslassrohrs (61) erfolgt.

4. Das Verfahren entsprechend Anspruch 1, wobei der genannte Schritt des Entfernens durch Saugen durch eine Saugpumpe (70) erfolgt, die mit dem genannten zweiten Auslass (42) verbunden ist.

5. Das Verfahren entsprechend Anspruch 1, wobei die genannten pflanzlichen oder tierischen Nahrungsmittel vor dem genannten Schritt des Extrahierens einen Behandlungsschritt unterzogen werden, um ein behandeltes Produkt zu erhalten, wobei der genannte Behandlungsschritt aus der Gruppe bestehend aus Folgenden ausgewählt wird:
- einem Schritt des Erweichens;
- einem Schritt des Mahlens;
- einem Schritt des Zerkleinems;
- einem Schritt des Sichens;
- einem Schritt des Zerschneidens
oder einer Kombination dieser.

6. Das Verfahren entsprechend Anspruch 1, wobei das genannte Sieb (26) eine Röhrenform hat und das genannte Hauptprodukt während des Schritts des Extrahierens radial zum genannten Sieb (26) durch die genannten Löcher (28) und den genannten ersten Auslass (41) entleert wird, während sich die genannten Abfallstoffe axial im genannten Rotor bewegen, bis sie den genannten zweiten Auslass (42) erreichen.

7. Das Verfahren entsprechend Anspruch 1, wobei die genannte heterogene Mischung einem Schritt der Trennung unterzogen wird, z.B. durch Schleudern, um die genannten wesentlich festen Abfallstoffe von der genannten Flüssigkeit zu trennen.

8. Eine Vorrichtung zum Extrahieren von Püree oder Saft auf pflanzlichen oder tierischen Nahrungsmitteln, bestehend aus:
- einem Zufuhrbereich zum Zuführen der genannten pflanzlichen tierischen Nahrungsmittel;
- einem Extrahierbereich (40), in dem ein Rotor (27) so angeordnet ist, dass er der in Kombination mit einem Sieb (26) operiert, das eine Mehrzahl an Löchern (28) aufweist, um das genannte Nahrungsmittel in ein Hauptprodukt, das aus dem genannten Püree oder Saft besteht, das durch das genannten Sieb (26) läuft, und wesentlich feste Abfallstoffe zu trennen, die das genannte Sieb (26) nicht durchlaufen können;
- einem Entleerungsbereiche bestehend aus:
- einem ersten Auslass (41), durch den das genannten Hauptprodukt, welches die genannten Löcher (28) durchlaufen hat, entleert wird;
- einem zweiten Auslass (42), durch den die wesentlich festen Abfallstoffe, welche die genannten Löcher (28) nicht durchlaufen haben, entleert werden; zudem Bereitstellen der Folgenden;
- einen Zugabebereich (50) zum Hinzufügen einer gemessenen Menge einer Flüssigkeit (74) zu den genannten, wesentlich festen Abfallstoffen, wodurch eine heterogene Mischung aus den genannten Abfallstoffen und der genannten Flüssigkeit erhalten wird, wobei der genannte Zugabebereich (50) stromab vom genannten Extrahierbereich (40) und am genannten zweiten Auslass (42) angcordnet ist; **gekennzeichnet durch**
einen Saugbereich zum Entfernen der genannten heterogenen Mischung aus dem genannten zweiten Auslass (42), wobei im genannten Saugbereich eine Saugvorrichtung vorgesehen ist, und **dadurch, dass** im genannten Extrahierbereich ein bestimmtes Vakuum erstellt wird, um enzymatische Reaktionen auf einem Minimum zu halten.

9. Eine Vorrichtung entsprechend Anspruch 8, wobei der genannte zweite Auslass (42) mit dem Auslassrohr (61) verbunden ist und das und Zufuhrrohr (62) des genannten Zugabebereichs (50) zumindest eine Düse aufweist, durch welche die genannte gemessene Flüssigkeitsmenge in das genannte Auslassrohr (61) gesprüht wird und mit den genannten wesentlich festen Abfallstoffen gemischt wird, um eine heterogene Mischung zur erzeugen.

10. Eine Vorrichtung entsprechend Anspruch 8, wobei die genannte Saugvorrichtung zumindest eine Saugpumpe umfasst, die mit dem zweiten Auslass (42) verbunden ist.

11. Eine Vorrichtung entsprechend Anspruch 8, wobei zwischen dem genannten Zufuhrbereich und dem genannten Extrahierbereich ein Behandlungsbereich vorgesehen ist, um das genannte pflanzliche oder tierische Nahrungsmittel zu behandeln, um ein behandeltes Produkt zu erhalten, wobei der genannte Behandlungsbereich aus der folgenden Gruppe ausgewählt wird:
- einem Bereich zum Erweichen;
- einem Bereich zum Mahlen;
- einem Bereich zum Zerkleinern;
- einem Bereich zum Sieben;
- einem Bereich zum Zerschneiden
- oder einer Kombination dieser.

12. Eine Vorrichtung entsprechend Anspruch 11, wobei der genannte Behandlungsbereich ein Bereich zum Erweichen ist, der einen Rotor (21) umfasst, der von einem Motor (80) betrieben wird und so adaptiert ist, dass er in Kombination mit einem Stator (22) auf das genannte Ausgangsprodukt schnell hintereinander eine Reihe von Impulsen anwendet.

13. Eine Vorrichtung entsprechend Anspruch 8, wobei das genannten Sieb röhrenförmig ist und der genannte erste Auslass (41) in einer Richtung angeordnet ist, die wesentlich radial zum genannten Sieb ist, so dass das Hauptprodukt radial zum genannten Sieb entleert wird, wobei sich die genannten Abfallstoffe axial im genannten Rotor vorwärts bewegen, bis sie den genannten zweiten Auslass (42) erreichen, der am Ende des genannten Siebs angeordnet ist.

## Revendications

1. Un procédé de retrait d'un matériau de déchet dans un processus d'extraction de purée, ou de jus, d'un aliment végétal ou animal, ledit procédé comprenant les opérations suivantes :
- l'acheminement dudit aliment végétal ou animal,
- l'extraction d'un produit principal contenant ladite purée, ou jus dudit aliment végétal ou animal, ladite opération d'extraction étant réalisée par l'intermédiaire d'un rotor (27) qui fonctionne en combinaison avec un tamis (26) qui possède une pluralité de trous (28) de façon à effectuer la séparation dudit aliment en un produit principal et en un matériau de déchet sensiblement solide, ladite extraction étant effectuée au niveau d'une section d'extraction (40),
- la décharge du produit principal qui a passé au travers desdits trous par l'intermédiaire de une première sortie (41),
- la décharge du matériau de déchet sensiblement solide qui n'a pas passé au travers desdits trous par l'intermédiaire d'une deuxième sortie (42), l'exécution des opérations suivantes :
- l'ajout d'une quantité mesurée d'un liquide (74) audit matériau de déchet sensiblement solide en aval de ladite opération d'extraction et au niveau de ladite deuxième sortie (42) afin d'obtenir un mélange hétérogène contenant ledit matériau de déchet et ledit liquide, **caractérisé en ce que**
le procédé retire par aspiration ledit mélange hétérogène de ladite deuxième sortie (42), ladite opération d'aspiration étant effectuée au moyen d'un moyen d'aspiration, et **en ce que** ladite opération d'extraction est effectuée dans un environnement de vide de façon à minimiser les réactions enzymatiques.

2. Le procédé selon la Revendication 1, où ladite deuxième sortie (42) est un conduit de décharge (61) et ladite opération d'ajout d'une quantité mesurée d'un liquide est effectuée au niveau d'un point dudit conduit de décharge (61).

3. Le procédé selon la Revendication 1, où ladite deuxième sortie (42) est un conduit de décharge (61) et ladite opération d'ajout d'une quantité mesurée d'un liquide est effectuée au niveau d'une pluralité de points le long dudit conduit de décharge (61).

4. Le procédé selon la Revendication 1, où ladite opération de retrait par aspiration est effectuée par une pompe d'aspiration (70) en communication avec ladite deuxième sortie (42).

5. Le procédé selon la Revendication 1, où avant ladite opération d'extraction, ledit aliment végétal ou animal est soumis à une opération de traitement destinée à obtenir un produit traité, où ladite opération de traitement est sélectionnée dans le groupe se composant de :
- une opération de ramollissement,
- une opération de broyage,
- une opération de hachage,
- une opération de tamisage,
- une opération de découpage,
ou une combinaison de celles-ci.

6. Le procédé selon la Revendication 1, où ledit tamis (26) possède une forme tubulaire et au cours de ladite opération d'extraction, ledit produit principal, contenant ladite purée et/ou ledit jus, est déchargé radialement vers ledit tamis (26) au travers desdits trous (28) et ladite première sortie (41), tandis que ledit matériau de déchet se déplace axialement dans ledit rotor jusqu'à atteindre ladite deuxième sortie (42).

7. Le procédé selon la Revendication 1, où ledit mélange hétérogène est soumis à une opération de séparation, par exemple par centrifugation, de façon à séparer ledit matériau de déchet sensiblement solide dudit liquide.

8. Un appareil d'extraction de purée, ou de jus, d'un aliment végétal ou animal, comprenant :
- une section d'acheminement destiné à acheminer ledit aliment végétal ou animal,
- une section d'extraction (40) dans laquelle un rotor (27) est agencé qui fonctionne en combinaison avec un tamis (26) qui possède une pluralité de trous (28) afin de séparer ledit aliment en un produit principal contenant ladite purée, ou jus, qui passe au travers dudit tamis (26), et en un matériau de déchet sensiblement solide qui ne peut pas passer au travers dudit tamis (26),
- une section de décharge comprenant :
- une première sortie (41) au travers de laquelle ledit produit principal qui a passé au travers desdits trous (28) est déchargé,
- une deuxième sortie (42) au travers de laquelle ledit matériau de déchet sensiblement solide qui n'a pas passé au travers desdits trous (28) est déchargé, fournissant en outre :
- une section d'ajout (50) pour l'ajout d'une quantité mesurée d'un liquide (74) audit matériau de déchet sensiblement solide de façon à obtenir un mélange hétérogène contenant ledit liquide et ledit matériau de déchet, ladite section d'ajout (50) étant agencée en aval de ladite section d'extraction (40) et au niveau de ladite deuxième sortie (42), **caractérisé en ce que**
une section d'aspiration est destinée au retrait dudit mélange hétérogène de ladite deuxième sortie (42), dans ladite section d'aspiration un moyen d'aspiration étant fourni, et **en ce que**, dans ladite section d'extraction, un vide déterminé est créé de façon à minimiser les réactions enzymatiques.

9. L'appareil selon la Revendication 8, où ladite deuxième sortie (42) est en communication avec un conduit de décharge (61), et un conduit d'acheminement (62) de ladite section d'ajout (50) comprend au moins une buse au travers de laquelle ladite quantité mesurée de liquide est pulvérisée dans ledit conduit de décharge (61) et est mélangée avec ledit matériau de déchet sensiblement solide, créant ainsi un mélange hétérogène.

10. L'appareil selon la Revendication 8, où ledit moyen d'aspiration comprend au moins une pompe d'aspiration en communication avec ladite deuxième sortie (42).

11. L'appareil selon la Revendication 8, où, entre ladite section d'acheminement et ladite section d'extraction, une section de traitement est fournie destinée à traiter ledit aliment végétal ou animal, de façon à obtenir ainsi un produit traité, ladite section de traitement étant sélectionnée dans le groupe se composant de :
- une section de ramollissement,
- une section de broyage,
- une section de hachage,
- une section de tamisage,
- une section de découpage,
- ou une combinaison de celles-ci

12. L'appareil selon la Revendication 11, où ladite section de traitement est une section de ramollissement comprenant un rotor (21) actionné par un moteur (80) et qui est adapté de façon à appliquer, en combinaison avec un stator (22), une pluralité d'impulsions en succession rapide sur ledit produit de démarrage.

13. L'appareil selon la Revendication 8, où ledit tamis possède une forme tubulaire et ladite première sortie (41) est agencée le long d'une direction qui est sensiblement radiale par rapport audit tamis, de sorte que ledit produit principal soit déchargé radialement vers ledit tamis, ledit matériau de déchet avançant axialement dans ledit rotor jusqu'à atteindre ladite deuxième sortie (42) agencée au niveau de l'extrémité dudit tamis.
